# FASCICULE DE BREVET EUROPEEN

(11) **EP 3 775 498 B1**
(45) Date de publication et mention de la délivrance du brevet: **09.02.2022**
(21) Numéro de dépôt: 19719905.2
(22) Date de dépôt: 28.03.2019
(51) Int. Cl.: F01D 11/24, F02C 7/32

(54) **DISPOSITIF DE REFROIDISSEMENT POUR UNE TURBINE D'UNE TURBOMACHINE**
KÜHLVORRICHTUNG FÜR EINE TURBINE EINES TURBINENMOTORS
COOLING DEVICE FOR A TURBINE OF A TURBINE ENGINE

(30) Priorité: 09.04.2018 FR 1853059
(43) Date de publication de la demande: 17.02.2021
(73) Titulaire: SAFRAN AIRCRAFT ENGINES, 75015 Paris (FR)
(72) Inventeur: MORLIERE, Simon, Nicolas, 77550 MOISSY-CRAMAYEL (FR); GIRARDEAU, Julian, Nicolas, 77550 MOISSY-CRAMAYEL (FR); PRESTEL, Sebastien, Jean, Laurent, 77550 MOISSY-CRAMAYEL (FR); ABADIE, Ghislain, Hervé, 77550 MOISSY-CRAMAYEL (FR); GILLOT, Benjamin, Franklin, François, 77550 MOISSY-CRAMAYEL (FR)
(74) Mandataire: Ernest Gutmann - Yves Plasseraud S.A.S.
(86) Numéro de dépôt international: PCT/FR2019/050715
(87) Numéro de publication internationale: WO 2019/197743

(56) Documents cités:
- FR-A1- 2 995 022
- FR-A1- 3 040 428
- FR-A1- 3 054 000

## Description

### DOMAINE

La présente invention concerne un dispositif de refroidissement pour une turbine d'une turbomachine, telle par exemple qu'un turboréacteur d'avion, en particulier un turboréacteur à double flux.

### CONTEXTE

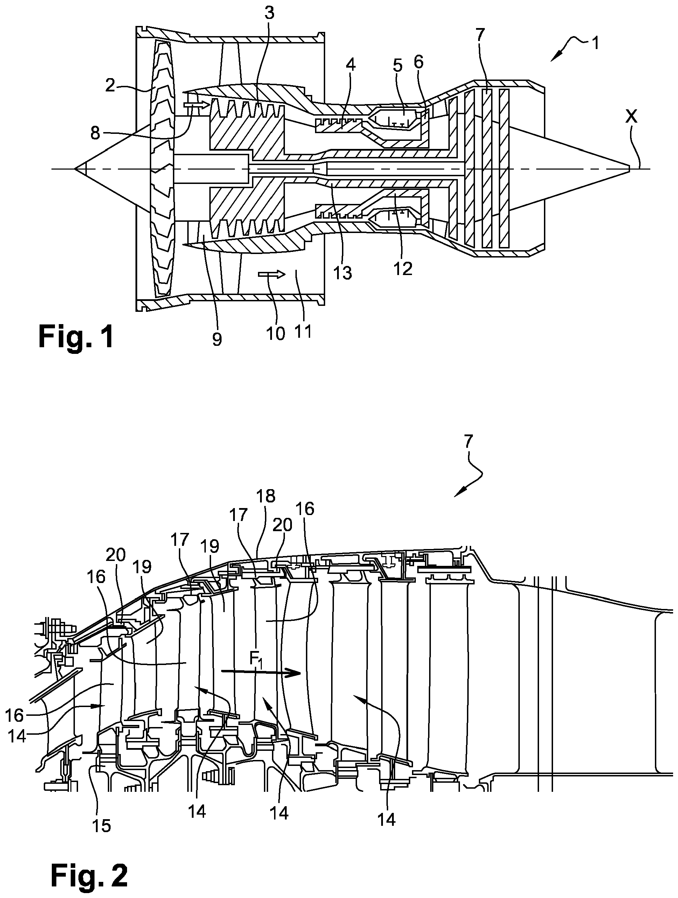

La figure 1 représente une turbomachine 1 à double flux et à double corps. L'axe de la turbomachine est référencé X et correspond à l'axe de rotation des parties tournantes. Dans ce qui suit, les termes axial et radial sont définis par rapport à l'axe X.

La turbomachine 1 comporte, de l'amont vers l'aval dans le sens d'écoulement des gaz, une soufflante 2, un compresseur basse pression 3, un compresseur haute pression 4, une chambre de combustion 5, une turbine haute pression 6 et une turbine basse pression 7.

L'air issu de la soufflante 2 est divisé en un flux primaire 8 s'écoulant dans une veine annulaire primaire 9, et un flux secondaire 10 s'écoulant dans une veine annulaire secondaire 11 entourant la veine annulaire primaire 10.

Le compresseur basse pression 3, le compresseur haute pression 4, la chambre de combustion 5, la turbine haute pression 6 et la turbine basse pression 7 sont ménagées dans la veine primaire 9.

Le rotor de la turbine haute pression 6 et le rotor du compresseur haute pression 4 sont couplés en rotation par l'intermédiaire d'un premier arbre 12 de manière à former un corps haute pression.

Le rotor de la turbine basse pression 7 et le rotor du compresseur basse pression 3 sont couplés en rotation par l'intermédiaire d'un second arbre 13 de manière à former un corps basse pression, la soufflante 2 pouvant être reliée directement au rotor du compresseur basse pression 3 ou bien par l'intermédiaire d'un train d'engrenage épicycloïdal par exemple.

Comme cela est mieux visible à la figure 2, la turbine basse-pression 7 comporte en particulier différents étages successifs comportant des roues mobiles 14 et des parties fixes. La roue mobile comporte un disque 15 au niveau duquel sont montées des aubes 16. Les extrémités des aubes 16 sont entourées d'un anneau fixe 17 en matériau abradable, ledit anneau 17 étant fixé sur le carter 18 de la turbine. Des distributeurs 19 sont situés en aval des roues mobiles 14. Les distributeurs 19 et les anneaux 17 sont montés sur le carter par l'intermédiaire de brides ou de crochets 20 s'étendant depuis la surface radialement interne du carter 18.

Afin de garantir un rendement élevé de la turbomachine, il convient de limiter le flux d'air ne traversant pas les roues mobiles 14 des différents étages, c'est-à-dire de limiter les fuites entre les extrémités radialement externes des aubes 16 et l'anneau 17 en matériau abradable. Pour cela, il convient de contrôler le jeu au niveau de cette interface, ce jeu étant fortement dépendant de la température du carter 18, et notamment des zones dudit carter 18 comportant les crochets ou brides 20 supportant l'anneau 17.

Le flux d'air primaire issu de la chambre de combustion 5 présente une température très élevée et échauffe les parties situées en aval, telles que les parties fixes et mobiles de la turbine 6, 7.

Afin de maîtriser le jeu précité et d'éviter toute dégradation prématurée des différentes parties fixes et mobiles de la turbine, il est nécessaire de prévoir des moyens de refroidissement efficaces pouvant s'intégrer aisément dans l'environnement de la turbomachine. Le document FR3054000 divulgue un dispositif de refroidissement d'un carter de turbine selon l'art antérieur.

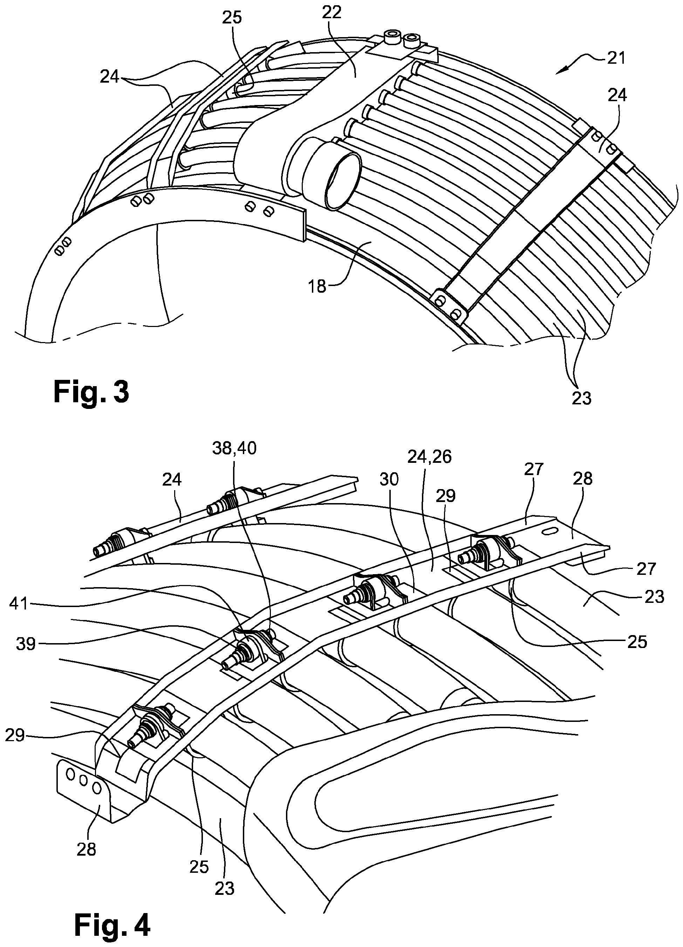

La demande de brevet FR 3 021 700, au nom de la Demanderesse, divulgue un dispositif de refroidissement 21 d'un carter 18 de turbine basse pression 7, visible à la figure 3, comportant des boîtiers collecteurs 22, chaque boîtier collecteur 22 formant un canal s'étendant axialement.

Le dispositif 21 comporte de plus des tubes 23 s'étendant circonférentiellement de part et d'autre des boîtiers collecteurs 22. Lesdits tubes 23, également appelés rampes, sont formés par des canalisations courbes de section circulaire, chaque tube 23 s'étendant circonférentiellement autour du carter par exemple selon un angle d'environ 90°.

Chaque tube 23 comporte une entrée d'air débouchant dans le canal du boîtier collecteur 22 correspondant et une extrémité distale fermée. Chaque tube 23 comporte en outre une paroi cylindrique pourvue d'orifices d'éjection d'air tournés vers le carter 18, de sorte que de l'air de refroidissement puisse pénétrer dans les boîtiers collecteurs 22 puis dans les tubes 23 avant de déboucher par les orifices en regard du carter 18, de manière à le refroidir. On parle notamment de refroidissement par impact puisque l'air vient impacter le carter 18.

Tous les tubes 23 sont maintenus ensemble sur le carter 18 par l'intermédiaire de supports 24 s'étendant selon l'axe de la turbomachine, et par l'intermédiaire de crochets ou d'organes de fixation 25, situés en différents endroits de la circonférence du carter 18.

Le document FR 3 002 590, au nom de la Demanderesse, divulgue une forme de réalisation dans laquelle les organes de fixation comportent une partie radialement interne entourant, au moins en partie, le tube correspondant, et une partie radialement externe s'étendant radialement, fixée sur une languette de fixation du support. Ladite languette de fixation est réalisée par découpage et pliage d'une partie du support. Des trous circulaires sont ménagés dans ladite languette et dans l'organe de fixation correspondant, lesdits trous permettant le passage d'une vis de fixation coopérant avec un écrou.

Il s'avère qu'il est difficile de maîtriser la position exacte des languettes après pliage, rendant difficile la maîtrise de la position radiale et axiale des crochets et donc des rampes servant au refroidissement des zones concernées du carter, ce qui affecte l'efficacité du refroidissement. Par ailleurs, il est possible que les parties radialement internes des tubes viennent en appui contre la surface externe du carter, sous l'effet des contraintes thermiques, mécaniques et vibratoires appliquées en fonctionnement. L'effort exercé par le carter sur les tubes est transmis aux languettes par l'intermédiaire des organes de fixation, ce qui peut avoir pour effet une déformation plastique irréversible des languettes, voire des organes de fixation, rendant impossible le bon positionnement radial et axial ultérieur des tubes par rapport au carter.

### RESUME DE L'INVENTION

L'invention a notamment pour but d'apporter une solution simple, efficace et économique à ces problèmes.

A cet effet, elle propose un dispositif de refroidissement s'étendant circonférentiellement autour d'un carter de turbomachine, tel par exemple qu'un carter de turbine, comportant
- un support s'étendant axialement et destiné à être fixé au carter,
- au moins un tube de refroidissement s'étendant circonférentiellement,
- au moins un organe de fixation, comportant une partie radialement interne entourant au moins en partie le tube, et une partie radialement externe fixée au support,
caractérisé en ce que la partie radialement externe de l'organe de fixation est fixée au support par l'intermédiaire de moyens de liaison, lesdits moyens de liaison comportant deux organes de liaison, chaque organe de liaison comportant une partie s'étendant radialement et une partie s'étendant axialement, les parties radiales des organes de liaison étant situées en regard l'une de l'autre et fixées l'une à l'autre, la partie radialement externe de l'organe de fixation étant fixée auxdites parties radiales des organes de liaison, les parties axiales des organes de liaison étant fixées au support et s'étendant chacune selon une direction axiale opposée.

Les deux organes de liaison sont ainsi disposés dos à dos, de façon opposée. En particulier, les organes de liaison peuvent être orientés de façon symétrique l'un par rapport à l'autre, par rapport à un plan radial parallèle aux parties radiales des organes de liaison. Les deux organes de liaison peuvent présenter des structures identiques ou similaires. Une telle disposition permet de renforcer les moyens de liaison et éviter qu'ils ne se déforment plastiquement en cas de contact des tubes sur le carter.

Par ailleurs, l'utilisation d'organes de liaison distincts du support permet de mieux contrôler la fabrication des différents éléments ainsi que la chaîne de cotes permettant de placer avec précision les tubes par rapport au carter, aussi bien axialement que radialement.

Les parties radiales des organes de liaison peuvent être en contact l'une sur l'autre. Un élément radial peut, à l'inverse, être intercalé axialement entre lesdites parties radiales. Les parties radiales des organes de liaison peuvent être soudées, rivetées ou vissées l'une à l'autre. Les parties axiales des organes de liaison peuvent être soudées, rivetées ou soudées sur le support. De préférence, les organes de liaison sont soudés sur le support.

Chaque organe de liaison peut être formé par une tôle pliée.

Chaque organe de liaison peut être formé par pliage de la tôle.

Le support peut être formé par une tôle. Le support peut être obtenu par découpage, pliage et/ou emboutissage de ladite tôle.

La partie radialement externe de l'organe de fixation est fixée aux organes de liaison par l'intermédiaire d'au moins une vis ou d'un rivet s'étendant axialement.

La vis ne s'étendant pas dans la direction radiale, il est possible d'augmenter le diamètre du tube correspondant et de la partie radialement interne de l'organe de fixation entourant le tube, sans que ces éléments n'interfèrent avec la vis.

Les parties radiales des organes de liaison peuvent comporter des trous oblongs s'étendant radialement, ladite vis ou ledit rivet étant engagé dans lesdits trous oblongs.

Ainsi les organes de fixation et les tubes peuvent se déplacer radialement par rapport au support et aux organes de liaison. En d'autres termes, il est possible de maîtriser la position radiale des tubes par rapport au carter, avant vissage ou rivetage, ce qui permet de maîtriser efficacement le refroidissement du carter.

Le dispositif peut comporter au moins deux tubes s'étendant circonférentiellement et écartés axialement l'un de l'autre, chaque tube étant fixé au support par l'intermédiaire d'un organe de fixation, les parties radialement externes des organes de fixation étant fixées aux parties radiales des organes de liaison.

Dans un tel cas, les organes de fixation permettant de fixer les deux tubes adjacents peuvent être disposés de façon symétrique, l'un par rapport à l'autre, par rapport à un plan radial s'étendant entre lesdits organes de fixation.

Une telle disposition permet de réduire l'encombrement axial de ces éléments.

Chaque organe de fixation peut comporter une partie sensiblement circulaire entourant le tube, et une partie de fixation s'étendant radialement vers l'extérieur depuis la partie circulaire et formant une patte de fixation. La partie circulaire est alors radialement interne tandis que la patte de fixation est radialement externe.

Le support peut comporter au moins une lumière située radialement en regard de la partie radialement interne de l'organe de fixation ou des organes de fixation, la partie axiale d'au moins un organe de liaison comportant une partie centrale s'étendant en regard de la lumière.

De cette manière, dans le cas où le carter vient en appui sur les tubes ou sur les parties internes des organes de fixation, la partie centrale est apte à limiter le déplacement de la partie interne de l'organe de fixation correspondant, de façon à maîtriser la déformation des parties radiales des organes de liaison et de l'organe de fixation, afin d'éviter une déformation plastique desdites parties radiales.

Chaque lumière du support peut présenter une forme oblongue et s'étendre axialement. Chaque lumière du support peut présenter une forme générale rectangulaire.

Plus particulièrement, la partie axiale de chaque organe de liaison peut comporter une partie centrale. Chaque partie centrale peut coopérer avec la partie interne d'un organe de fixation. Une telle disposition est particulièrement adaptée au cas où les tubes sont fixés par paires aux moyens de liaison.

Chaque organe de liaison peut présenter une forme générale en U comportant la partie centrale, destinée à former la base du U, à partir de laquelle s'étendent deux branches d'extrémité qui s'étendent chacune axialement sur un côté opposé de la lumière.

Une entretoise s'étendant axialement peut être montée entre la partie radialement externe d'au moins un organe de fixation et les moyens de liaison. Chaque entretoise peut être tubulaire.

La longueur de l'entretoise peut être choisie pour maîtriser la position axiale des tubes par rapport au carter. L'utilisation d'entretoises permet également d'utiliser des composants standards, les corrections de positionnement axial des tubes par rapport au carter pouvant être obtenues individuellement par utilisation d'entretoises de différentes tailles.

Le support peut comporter une paroi principale s'étendant axialement, des rebords s'étendant radialement vers l'extérieur depuis les bords latéraux de la paroi principale.

Une telle structure permet d'améliorer le comportement dynamique du support lors du fonctionnement de la turbomachine en le rendant moins sensible aux vibrations.

Les parties axiales, au moins, des organes de liaison peuvent être situées circonférentiellement entre les rebords.

L'invention concerne également un ensemble comportant un carter annulaire de turbomachine, par exemple un carter annulaire de turbine, caractérisé en ce qu'il comporte un dispositif de refroidissement du type précité, fixé audit carter et entourant ledit carter.

L'invention concerne en outre une turbomachine comportant un ensemble du type précité.

L'invention sera mieux comprise et d'autres détails, caractéristiques et avantages de l'invention apparaîtront à la lecture de la description suivante faite à titre d'exemple non limitatif en référence aux dessins annexés.

### BREVE DESCRIPTION DES FIGURES

- la figure 1 est une vue en coupe axiale d'un turboréacteur à double flux de l'art antérieur,
- la figure 2 est une vue en coupe axiale d'une partie du turboréacteur de l'art antérieur, illustrant notamment la turbine basse pression,
- la figure 3 est une vue en perspective d'un dispositif de refroidissement de l'art antérieur,
- la figure 4 est vue en perspective d'une partie d'un dispositif de refroidissement selon une forme de réalisation de l'invention,
- la figure 5 est une vue en coupe d'une partie du dispositif de refroidissement selon l'invention,
- la figure 6 est une vue en perspective du support et des moyens de liaison,
- la figure 7 est une vue de détail de la figure 6,
- la figure 8 est une vue de détail de la figure 5,
- la figure 9 est une vue de détail de la figure 3.

### DESCRIPTION DETAILLEE

Les figures 4 à 9 illustrent une partie d'un dispositif de refroidissement 21 destiné à être monté sur un carter 18 de turbine basse pression 7 d'une turbomachine d'avion 1, selon une forme de réalisation de l'invention.

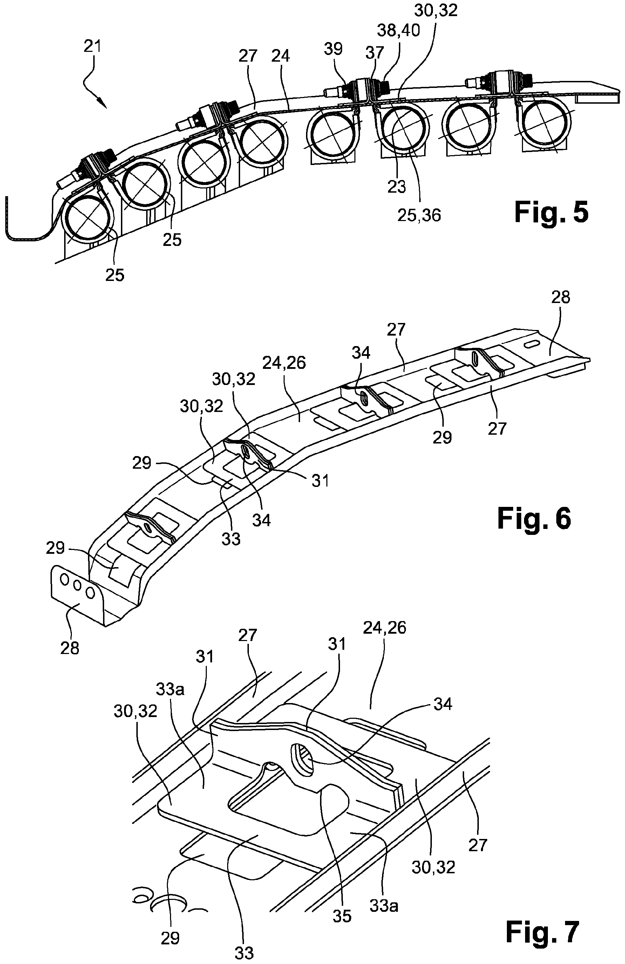

Le dispositif de refroidissement 1 comporte un support 24, dont la structure est mieux visible à la figure 6. Le support 24 est formé par découpage, pliage et/ou emboutissage d'une tôle et comporte une paroi principale 26 s'étendant axialement, des rebords 27 s'étendant radialement vers l'extérieur depuis les bords latéraux de la paroi principale 26. Les extrémités axiales de la paroi principale 26 comportent des zones de fixation 28, destinées à la fixation sur des brides du carter.

On notera que les zones de fixation 28 peuvent s'étendre radialement et/ou axialement. Dans la forme de réalisation représentée aux figures, une des zones de fixation 28 s'étendant radialement, l'autre zone de fixation 28 s'étendant axialement.

La paroi principale 26 comporte des lumières 29 de forme générale rectangulaires, ici quatre lumières 29 régulièrement réparties sur la paroi principale. Les lumières 29 s'étendent selon l'axe du support 24.

Le dispositif de refroidissement 1 comporte en outre des moyens de liaison comportant des organes de liaison formés par des tôles 30, ici quatre paires de tôles 30. Chaque tôle 30 comporte une partie 31 s'étendant radialement et une partie 32 s'étendant axialement. Les parties radiales 31 des tôles 30 sont situées en regard l'une de l'autre, en appui l'une sur l'autre, et soudées l'une à l'autre. Les parties axiales 32 des tôles 30 sont parallèles à la paroi principale 26 et sont soudées à la paroi principale 26.

La partie axiale 32 de chaque tôle 30 présente une forme générale en U comportant une partie centrale, à partir de laquelle s'étendent deux branches 34 comportant des premières extrémités reliées à la partie centrale 33 et des secondes extrémités reliées à la partie radiale 31 correspondante. Chaque partie centrale est située en regard d'une lumière 29 de la paroi principale 26. Deux tôles 30 sont ainsi montées en vis-à-vis au niveau de chaque lumière 29 du support 24.

Les parties radiales 31 des tôles 30 comportent des trous oblongs 34 s'étendant radialement. Le bord radialement interne 35 de la chaque partie radiale 31 présente une forme générale en M, arrondie, suivant notamment le contour de la partie inférieure du trou oblong 34. Une telle forme permet de limiter la quantité de matière, et donc le poids, tout en garantissant une tenue mécanique suffisante.

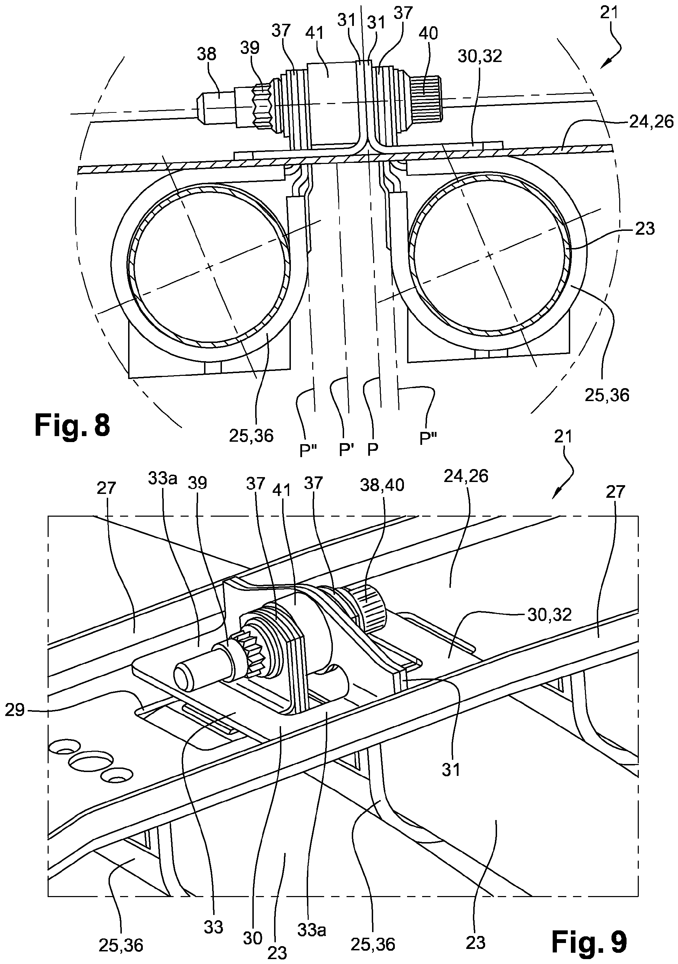

Les deux tôles 30 sont ainsi disposées côte à côté, de façon symétriques l'une par rapport à l'autre, par rapport à un plan radial P parallèle aux parties radiales des tôles 30 (figure 8). Les deux tôles 30 présentent des structures identiques. Les tôles 30 sont obtenues par découpage et pliage.

Le dispositif de refroidissement 1 comporte en outre des organes de fixation 36, ici quatre paires d'organes de fixation 25. Chaque organe de fixation 25 comporte une partie radialement interne 36, de forme circulaire, entourant au moins en partie le tube 23 correspondant, et une partie radialement externe 37 formant une patte de fixation 37 s'étendant radialement.

Dans la forme de réalisation représentée aux figures, chaque organe de fixation 25 est obtenu par pliage d'une tôle, la patte de fixation 37 est alors formée par les deux extrémités de la tôle, qui sont plaquées l'une sur l'autre. Ceci permet de faciliter l'introduction des tubes 23 dans la partie interne 36 des organes de fixation 25. Dans la suite de la description, ces deux extrémités sont considérées comme formant un même élément, à savoir la patte de fixation 37. Bien entendu, toute autre forme de réalisation des organes de fixation 25 peut être envisagée.

Un trou est ménagé dans la patte 37, le trou étant par exemple de forme circulaire.

Les organes de fixation 25 d'une même paire sont disposés côte à côté, de façon symétrique l'un par rapport à l'autre. En particulier, les organes de fixation 25 peuvent être orientés de façon symétrique l'un par rapport à l'autre, par rapport à un plan radial P' parallèle aux parties externes 37 des organes de fixation (figure 8). Les deux organes de fixation 25 peuvent présenter des structures identiques, ce qui permet de limiter le nombre de références de composants ainsi que les erreurs de montage.

Les parties radialement externes 37 des organes de fixation 25 d'une même paire sont fixées aux parties radiales 31 des tôles 30, axialement de part et d'autre des parties radiales 31 des tôles 30. On notera que la partie interne 36 de chaque organe de fixation 25 s'étend axialement d'un seul côté du plan radial P" défini par la partie externe 37 correspondante (figure 8). Le diamètre interne de la partie interne 36 de chaque organe de fixation 25 correspond sensiblement au diamètre externe du tube 23 correspondant.

Les parties externes ou pattes 37 sont fixées aux parties radiales 31 des tôles 30 correspondantes par l'intermédiaire d'une vis 38 et d'un écrou 39. La vis 38 s'étend axialement au travers des trous des pattes et des trous oblongs des tôles 30. La tête 40 de la vis 38 prend appui sur la patte 37 de l'un des organes de fixation 25 d'une paire, l'écrou 39 prenant appui sur la patte 37 de l'autre organe de fixation 25 de ladite paire.

Il est ainsi possible de maîtriser la position radiale des organes de fixation 25 et des tubes 23, par rapport au support 24 et aux organes de liaison 30. En d'autres termes, il est possible de maîtriser la position radiale des tubes 23 par rapport au carter 18, avant vissage ou rivetage, par déplacement radial de la vis 38 dans les trous oblongs 34.

Une entretoise 41 s'étendant axialement peut être prévue entre l'une au moins des pattes 37 et la partie radiale 31 de la tôle 30 correspondante. Bien entendu, une entretoise 41 peut être prévue entre chaque patte 37 et la partie radiale 31 de la tôle 30 correspondante.

La longueur de l'entretoise 41 peut être choisie pour maîtriser la position axiale des tubes 23 par rapport au carter 18.

Dans le cas où le carter 18 vient en appui sur les tubes 23 ou sur les parties internes 36 des organes de fixation 25, les parties radialement internes 36 des organes de fixation 36 sont aptes à venir en appui sur les parties de butée 33 des tôles 30, au travers de la lumière 29 correspondante. On limite ainsi la déformation des organes de fixation 25 de manière à éviter toute déformation plastique de ces éléments. On notera que la formation de lumières 29 dans la paroi principale 26 permet notamment de réduire la masse du support 24.

## Revendications

1. Dispositif de refroidissement (21) configuré pour s'étendre circonférentiellement autour d'un carter (18) de turbomachine (1), tel par exemple qu'un carter (18) de turbine (7), comportant
- un support (24) s'étendant axialement et destiné à être fixé au carter (18),
- au moins un tube de refroidissement (23) s'étendant circonférentiellement,
- au moins un organe de fixation (25), comportant une partie radialement interne (36) entourant au moins en partie le tube (23), et une partie radialement externe (37) fixée au support (24),
**caractérisé en ce que** la partie radialement externe (37) de l'organe de fixation (25) est fixée au support (24) par l'intermédiaire de moyens de liaison (30), lesdits moyens de liaison comportant deux organes de liaison (30), chaque organe de liaison (30) comportant une partie (31) s'étendant radialement et une partie (32) s'étendant axialement, les parties radiales (31) des organes de liaison (30) étant situées en regard l'une de l'autre et fixées l'une à l'autre, la partie radialement externe (37) de l'organe de fixation (25) étant fixée auxdites parties radiales (31) des organes de liaison (30), les parties axiales (32) des organes de liaison (30) étant fixées au support (24) et s'étendant chacune selon une direction axiale opposée.

2. Dispositif de refroidissement selon la revendication 1, **caractérisé en ce que** chaque organe de liaison (30) est formé par une tôle pliée.

3. Dispositif de refroidissement selon la revendication 1 ou 2, **caractérisé en ce que** la partie radialement externe (37) de l'organe de fixation (25) est fixée aux organes de liaison (30) par l'intermédiaire d'au moins une vis (38) ou d'un rivet s'étendant axialement.

4. Dispositif de refroidissement selon la revendication 3, **caractérisé en ce que** les parties radiales (31) des organes de liaison (30) comportent des trous oblongs (34) s'étendant radialement, ladite vis (38) ou ledit rivet étant engagé dans lesdits trous oblongs (34).

5. Dispositif de refroidissement selon l'une des revendications 1 à 4, **caractérisé en ce qu'**il comporte au moins deux tubes (23) s'étendant circonférentiellement et écartés axialement l'un de l'autre, chaque tube (23) étant fixé au support (24) par l'intermédiaire d'un organe de fixation (25), les parties radialement externes (37) des organes de fixation (25) étant fixées aux parties radiales (31) des organes de liaison (30).

6. Dispositif de refroidissement selon l'une des revendications 1 à 5, **caractérisé en ce que** le support (24) comporte au moins une lumière (29) située radialement en regard de la partie radialement interne (36) de l'organe de fixation (25) ou des organes de fixation (25), la partie axiale (32) d'au moins un organe de liaison (30) comportant une partie centrale (33) s'étendant en regard de la lumière (29).

7. Dispositif de refroidissement selon la revendication 6, **caractérisé en ce que** la partie axiale (32) de chaque organe de liaison (30) présente une forme générale en U comportant la partie centrale (33) à partir de laquelle s'étendent deux branches d'extrémité (33a) qui s'étendent chacune axialement sur un côté opposé de la lumière (29).

8. Dispositif de refroidissement selon l'une des revendications 1 à 7, caractérisé en en ce qu'une entretoise (41) s'étendant axialement est montée entre la partie radialement externe (37) d'au moins un organe de fixation (25) et les moyens de liaison (30).

9. Dispositif de refroidissement selon l'une des revendications 1 à 8, **caractérisé en ce que** le support (24) comporte une paroi principale (26) s'étendant axialement, des rebords (27) s'étendant radialement vers l'extérieur depuis les bords latéraux de la paroi principale (26).

10. Ensemble comportant un carter annulaire (18) de turbomachine (1), par exemple un carter annulaire (18) de turbine (7), **caractérisé en ce qu'**il comporte un dispositif de refroidissement (21) selon l'une des revendications 1 à 9, fixé audit carter (18) et entourant ledit carter (18).

## Patentansprüche

1. Kühlvorrichtung (21), die dazu ausgelegt ist, sich in Umfangsrichtung um ein Gehäuse (18) einer Turbomaschine (1), wie beispielsweise ein Gehäuse (18) einer Turbine (7), zu erstrecken, enthaltend:
- eine sich axial erstreckende Halterung (24), die an das Gehäuse (18) befestigt werden soll,
- zumindest ein Kühlrohr (23), das sich in Umfangsrichtung erstreckt,
- zumindest ein Befestigungsorgan (25), das einen radial inneren Abschnitt (36), der das Rohr (23) zumindest teilweise umgibt, und einen radial äußeren Abschnitt (37), der an die Halterung (24) befestigt ist, enthält,
**dadurch gekennzeichnet, dass** der radial äußere Abschnitt (37) des Befestigungsorgans (25) über Verbindungsmittel (30) an die Halterung (24) befestigt ist, wobei die Verbindungsmittel Verbindungsorgane (30) enthalten, wobei jedes Verbindungsorgan (30) einen sich radial erstreckenden Abschnitt (31) und einen sich axial erstreckenden Abschnitt (32) enthält, wobei die radialen Abschnitte (31) der Verbindungsorgane (30) einander gegenüberliegen und aneinander befestigt sind, wobei der radial äußere Abschnitt (37) des Befestigungsorgans (25) an die radialen Abschnitte (31) der Verbindungsorgane (30) befestigt ist, wobei die axialen Abschnitte (32) der Verbindungsorgane (30) an die Halterung (24) befestigt sind und sich jeweils in entgegengesetzter axialer Richtung erstrecken.

2. Kühlvorrichtung nach Anspruch 1, **dadurch gekennzeichnet, dass** jedes Verbindungsorgan (30) aus einem gebogenen Blech gebildet ist.

3. Kühlvorrichtung nach Anspruch 1 oder 2, **dadurch gekennzeichnet, dass** der radial äußere Abschnitt (37) des Befestigungsorgans (25) über zumindest eine sich axial erstreckende Schraube (38) bzw. Niete an die Verbindungsorgane (30) befestigt ist.

4. Kühlvorrichtung nach Anspruch 3, **dadurch gekennzeichnet, dass** die radialen Abschnitte (31) der Verbindungsorgane (30) radial verlaufende Langlöcher (34) aufweisen, wobei die Schraube (38) bzw. Niete in die Langlöcher (34) eingreift.

5. Kühlvorrichtung nach einem der Ansprüche 1 bis 4, **dadurch gekennzeichnet, dass** sie zumindest zwei Rohre (23) enthält, die sich in Umfangsrichtung erstrecken und axial voneinander beabstandet sind, wobei jedes Rohr (23) über ein Befestigungsorgan (25) an die Halterung (24) befestigt ist, wobei die radial äußeren Abschnitte (37) der Befestigungsorgane (25) an die radialen Abschnitte (31) der Verbindungsorgane (30) befestigt sind.

6. Kühlvorrichtung nach einem der Ansprüche 1 bis 5, **dadurch gekennzeichnet, dass** die Halterung (24) zumindest einen Schlitz (29) aufweist, der dem radial inneren Abschnitt (36) des Befestigungsorgans (25) bzw. der Befestigungsorgane (25) radial gegenüberliegt, wobei der axiale Abschnitt (32) zumindest eines Verbindungsorgans (30) einen Mittelabschnitt (33) enthält, der sich dem Schlitz (29) gegenüberliegend erstreckt.

7. Kühlvorrichtung nach Anspruch 6, **dadurch gekennzeichnet, dass** der axiale Abschnitt (32) eines jeden Verbindungsorgans (30) eine U-Form mit einem Mittelabschnitt (33) aufweist, von dem ausgehend sich zwei Endschenkel (33a) erstrecken, die jeweils axial auf einer entgegengesetzten Seite des Schlitzes (29) verlaufen.

8. Kühlvorrichtung nach einem der Ansprüche 1 bis 7, **dadurch gekennzeichnet, dass** ein sich axial erstreckender Abstandhalter (41) zwischen dem radial äußeren Abschnitt (37) zumindest eines Befestigungsorgans (25) und den Verbindungsmitteln (30) angebracht ist.

9. Kühlvorrichtung nach einem der Ansprüche 1 bis 8, **dadurch gekennzeichnet, dass** die Halterung (24) eine sich axial erstreckende Hauptwand (26) aufweist, wobei sich von den Seitenrändern der Hauptwand (26) ausgehend Randkanten (27) radial nach außen erstrecken.

10. Anordnung mit einem ringförmigen Gehäuse (18) einer Turbomaschine (1), beispielsweise einem ringförmigen Gehäuse (18) einer Turbine (7), **dadurch gekennzeichnet, dass** sie eine Kühlvorrichtung (21) nach einem der Ansprüche 1 bis 9 enthält, die an das Gehäuse (18) befestigt ist und das Gehäuse (18) umgibt.

## Claims

1. Cooling device (21) configured to extend circumferentially around a casing (18) of a turbomachine (1), such as for example a casing (18) of a turbine (7), comprising:
- an axially extending support (24) for attachment to the casing (18),
- at least one circumferentially extending cooling tube (23),
- at least one fastening device (25), comprising a radially inner part (36) at least partially surrounding the tube (23), and a radially outer part (37) fixed to the support (24), **characterised in that** the radially outer part (37) of the fastening device (25) is fixed to the support (24) by means of connecting means (30), said connecting means comprising two connecting members (30), each connecting member (30) comprising a radially extending portion (31) and an axially extending portion (32), the radial portions (31) of the connecting members (30) facing each other and fixed to each other, the radially outer portion (37) of the fixing member (25) being fixed to said radial portions (31) of the connecting members (30), the axial portions (32) of the connecting members (30) being fixed to the support (24) and each extending in an opposite axial direction.

2. Cooling device according to claim 1, **characterised in that** each connecting member (30) is formed by a folded sheet metal.

3. Cooling device according to claim 1 or 2, **characterised in that** the radially outer part (37) of the fastening device (25) is fastened to the connecting members (30) by means of at least one axially extending screw (38) or rivet.

4. Cooling device according to claim 3, **characterised in that** the radial portions (31) of the connecting members (30) have radially extending oblong holes (34), said screw (38) or said rivet being engaged in said oblong holes (34).

5. Cooling device according to claims 1 to 4, **characterised in that** it comprises at least two tubes (23) extending circumferentially and axially spaced apart, each tube (23) being attached to the support (24) by means of a fastening device (25), the radially outer parts (37) of the fastening devices (25) being attached to the radial parts (31) of the connecting members (30).

6. Cooling device according to one of claims 1 to 5, **characterised in that** the support (24) has at least one lumen (29) situated radially opposite the radially inner part (36) of the fixing member (25) or members (25), the axial part (32) of at least one connecting member (30) having a central part (33) extending opposite the lumen (29) .

7. Cooling device according to claim 6, **characterised in that** the axial portion (32) of each connecting member (30) is generally U-shaped with the central part (33) from which two end branches (33a) extend, each extending axially on an opposite side of the lumen (29).

8. Cooling device according to one of claims 1 to 7, **characterised in that** an axially extending spacer (41) is mounted between the radially outer part (37) of at least one fastening device (25) and the connecting means (30).

9. Cooling device according to one of claims 1 to 8, **characterised in that** the support (24) has an axially extending main wall (26), flanges (27) extending radially outwards from the side edges of the main wall (26).

10. Assembly comprising an annular casing (18) of a turbomachine (1), for example an annular casing (18) of a turbine (7), **characterised in that** it comprises a cooling device (21) according to one of claims 1 to 9, fixed to said casing (18) and surrounding said casing (18).
